# EUROPÄISCHE PATENTSCHRIFT

(11) **EP 2 631 107 B1**
(45) Veröffentlichungstag und Bekanntmachung des Hinweises auf die Patenterteilung: **16.09.2015**
(21) Anmeldenummer: 13000133.2
(22) Anmeldetag: 11.01.2013
(51) Int. Cl.: B60M 1/26

(54) **Nachspanneinrichtung für Kettenfahrleitungen elektrischer Bahnen**
Tension adjustment device for catenaries of electrical railways
Dispositif de réglage de tension pour caténaires à bandes électriques

(30) Priorität: 27.02.2012 DE 102012003579
(43) Veröffentlichungstag der Anmeldung: 28.08.2013
(73) Patentinhaber: Furrer + Frey AG, 3000 Bern 6 (CH)
(72) Erfinder: Furrer, Beat, CH-3012 Bern (CH); Wili, Urs, CH-3074 Muri bei Bern (CH); Casali, Bruno, CH-3125 Toffen (CH); Principe, Patrick, CH-3015 Bern (CH)
(74) Vertreter: von Bülow, Tam

(56) Entgegenhaltungen:
- DE-C- 204 886
- DE-C- 447 669

## Beschreibung

Die Erfindung bezieht sich auf Kettenfahrleitungen elektrischer Bahnen mit einer Nachspanneinrichtung sowie mit mindestens zwei Fahrleitungen, die-jeweils ein Tragseil und einen Fahrdraht aufweisen.

Solche Kettenfahrleitungensind aus der DE 204 886 C bekannt, die den Oberbegriff des Anspruchs 1 offenbart. Die Fahrleitungen werden an Portalrahmen gehalten, wobei ein Tragseil oberhalb von horizontale Balken der Portalrahmen verläuft und ein Fahrdraht über Haltedrähte an dem Tragseil aufgehängt ist. Der Fahrdraht läuft dabei unterhalb der horizontalen Balken durch. Die Enden von Tragseil und Fahrdraht einer Strecke sind in einem der dortigen Ausführungsbeispiele an schwenkbaren Rahmen befestigt, die am oberen Ende der Portalrahmen angebracht sind und Federn aufweisen, die somit indirekt den Fahrdraht und das Tragseil spannen. Am Ende einer Strecke sind der Fahrdraht und das Tragseil zwar unterhalb des horizontalen Balkens des Portalrahmens angeordnet jedoch ist ein horizontaler Balken des Rahmens, an dem die Federn angebracht, sind unterhalb des Balkens des Portalrahmens angeordnet und hat einen zweiten horizontalen Balken, an dessen Oberseite die jeweiligen Enden der Tragseile der Strecken angebracht sind.

Zur Energieeinspeisung elektrischer Bahnen werden als Oberleitungen üblicherweise sog. Kettenfahrleitungen verwendet mit einem Tragseil, das nach Art einer Kettenlinie durchhängt und einem daran aufgehängten Fahrdraht, der vom Stromabnehmer der Bahn beschliffen wird und daher möglichst konstante Höhe über dem Gleis haben soll. Aufgrund von Temperaturschwankungen, die im Bereich von der tiefsten anzunehmenden Umgebungstemperatur (z.B. -20°C) bis +80°C liegen können, ändert sich die Länge der Tragseile und Fahrdrähte. Um trotz dieser Längenänderung eine konstante Höhe des Fahrdrahtes über dem Gleis zu erhalten, werden Tragseile und Fahrdrähte nachgespannt, was herkömmlich über Klinkenräder und Gewichte erfolgt, die an Masten befestigt sind.
Masten stehen naturgemäß neben dem Gleis, was bedingt, dass Nachspannseile quer zu den Tragseilen und Fahrdrähten seitlich abgeführt werden müssen. Wenn die Nachspannvorrichtungen an einem Mast angebracht werden, können keine einfeldrigen Nachspannungen gebaut werden. Vielmehr bedingt diese Anordnung dann eine Nachspannung über drei Felder. Bei der dreifeldrigen Nachspannung müssen die Kettenwerke jedoch überkreuzt werden, was im Falle von Störungen an der Fahrleitung nicht günstig ist, weil dann in der Regel die beiden Kettenfahrleitungen, die ankommende und die weiterlaufende betroffen sind.

Als Tragwerk werden häufig Portalrahmen eingesetzt, mit zwei Vertikalmasten und zwei übereinander angeordneten horizontalen Abspannbalken, wobei der Fahrdraht über eine isolierte Auslegerkonstruktion unterhalb des unteren Abspannbalkens durchgeführt wird, während das Tragseil über einen ähnlichen isolierten Ausleger zwischen dem oberen und dem unteren Abspannbalken durchgeführt wird.

Die Fahrleitungen, die Tragseil und Fahrdraht enthalten, werden abschnittsweise verlegt, mit einer Überlappung in ein- oder mehrfeldriger Ausführung (DE 199 07 516 A1 oder DE 25 06 385 C3). Im sog. Übergangsbereich verlaufen die Fahrdrähte von zwei aneinander grenzenden Strecken über einen gewissen Abschnitt parallel zueinander, so daß der Stromabnehmer der Bahn immer mindestens einen der beiden Fahrdrähte kontaktiert. Auch kann im Übergangsbereich eine Streckentrennung stattfinden, so daß bei Wartungs- und Reparaturarbeiten immer nur eine Strecke spannungsfrei geschaltet werden muß. Die Länge einer Strecke liegt in der Größenordnung von 1200 m. Zum Nachspannen werden Gewichte oder Federn eingesetzt (DE 20 48 86 A, DE 28 34 898 A1) und in neuerer Zeit auch Nachspannvörrichtungen mit Spiralfedern, wie sie in der EP 2 066 523 B1 beschrieben sind. Auch dort sind aber Spanneinrichtungen mit Spiralfedern an seitlich neben der Strecke stehenden vertikalen Masten befestigt, was für die Verlegung der Fahrleitungen ungünstig ist, da Fahrdraht und Fahrleitung seitlich von der Strecke herausgeführt werden müssen, was komplizierte Umlenkkonstruktionen bedingt.

Das Verlegen der Fahrleitungen, also von Tragseil und Fahrdraht, erfolgt durch spezielle Verlegemaschinen, wie sie in der EP 0 962 354 B1 und WO 2005/115793 A1) beschrieben sind.

Aufgabe der Erfindung ist es, eine Nachspanneinrichtung für Kettenfahrleitungen elektrischer Bahnen zu schaffen, die ein einfaches und schnelles Verlegen von Fahrleitungen ermöglicht.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Der Grundgedanke der Erfindung liegt darin, an einem Portalrahmen mit einem einzigen horizontalen Abspannbalken eine vertikale Säule zu befestigen, an der Federelemente zum Nachspannen von Tragseil und Fahrdraht angebracht sind. Die Enden des Fahrdrahtes und des Tragseiles eines ersten Streckenabschnittes werden mit den Federelementen verbunden und damit gespannt. Fahrdraht und Tragseil eines zweiten Streckenabschnittes werden unter dem Abspannbalken durchgeführt. Damit kann ein Fahrleitungsverlegefahrzeug unter dem horizontalen Abspannbalken durchfahren, ohne daß das Tragseil und der Fahrdraht des zweiten Streckenabschnittes unterbrochen werden. Das Verlegen kann daher in einem kontinuierlichen Prozeß durchgeführt werden. Das Fahrleitungsverlegefahrzeug führt Fahrdrähte und Tragseile unter Zugkraft bis zu den Nachspanneinrichtungen, deren Federelemente bereits vorgespannt und festgeklemmt sind. Das vom Verlegefahrzeug kommende Ende von Tragseil und Fahrdraht wird dann unter Beibehaltung der Zugkraft mit der Nachspanneinrichtung verbunden und die Festklemmung wird gelöst, so daß die Nachspannung dann bereits auf dem richtigen Zugkraftniveau ist.

Die vertikalen Säulen liegen dabei direkt in Verlängerung von Tragseil und Fahrdraht, so daß auch keine komplizierten Umlenkkonstruktionen für das seitliche Herausführen von Nachspanndrähten erforderlich ist.

Erfindungsgemäß sind die Federelemente oberhalb der Abspannbalken angeordnet. Am unterhalb der Abspannbalken angeordneten Ende der vertikalen Säule ist eine Umlenkrolle angeordnet, an der der nachzuspannende Fahrdraht nach oben zum zugeordneten Federelement umgelenkt wird. Die Umlenkrolle ist dabei selbstverständlich höher angeordnet als der andere Fahrdraht, d.h. der an dieser Stelle nachzuspannende Fahrdraht ist gegenüber dem anderen Fahrdraht angehoben, damit weder die Umlenkrolle noch ein vor der Umlenkrolle angeordneter Isolator vom Stromabnehmer der Bahn berührt werden kann.

Man erkennt, dass das Verlegen der Fahrdrähte und Tragseile unter Beibehaltung der Zugkräfte durchgeführt werden kann und damit ohne Unterbrechung des kontinuierlichen Verlegeprozesses. Insbesondere muß das Tragseil nicht mehr, wie beim eingangs genannten Stand der Technik, zwischen zwei Abspannbalken durchgefädelt werden.

Weitere Ziele und Vorteile der Erfindung ergeben sich aus der nachfolgenden Beschreibung eines bevorzugten Ausführungsbeispieles, das im Zusammenhang mit der Zeichnung ausführlicher erläutert wird.

Es zeigt:
- Fig. 1: eine Prinzipskizze einer Kettenfahrleitung elektrischer Bahnen mit zwei Streckenabschnitten und einem Übergangsbereich;
- Fig. 2: eine Ansicht eines Portalrahmens mit Nachspanneinrichtung gesehen in Fahrtrichtung;
- Fig. 3: eine vergrößerte Schnittdarstellung längs der Linie A-A der Fig. 2, d.h. eine Seitenansicht der Nachspanneinrichtung;
- Fig. 4: eine vergrößerte Ansicht der Nachspanneinrichtung gesehen in Längsrichtung der Fahrleitung;
- Fig. 5: eine Draufsicht von oben auf die Nachspanneinrichtung nach der Erfindung;
- Fig. 6: eine teilweise abgeschnittene perspektivische Ansicht der Nachspanneinrichtung nach der Erfindung;
- Fig. 7: eine vergrößerte Detailansicht der Einzelheit C der Fig. 6;
- Fig. 8: eine vergrößerte Ansicht der Einzelheit D der Fig. 6; und
- Fig. 9: ein zweites Ausführungsbeispiel der Erfindung mit zylindrischen Zugfedern.

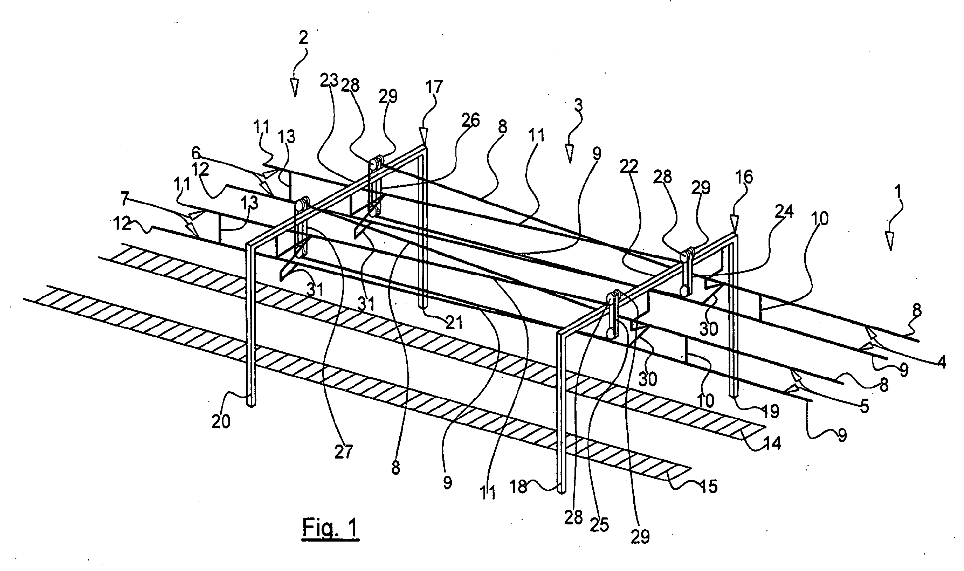

Fig. 1 zeigt Kettenfahrleitungen mit einem ersten Streckenabschnitt 1, einem zweiten Streckenabschnitt 2 und einem Übergangsbereich 3, in welchem sich Fahrleitungen 4 und 5 des ersten Streckenabschnittes mit Fahrleitungen 6 und 7 des zweiten Streckenabschnittes 2 überlappen. Die Fahrleitungen 4 und 5 des ersten Streckenabschnittes 1 haben jeweils ein Tragseil 8 und einen Fahrdraht 9, wobei der Fahrdraht 9 über Hängedrähte 10 an dem Tragseil 8 aufgehängt ist. In gleicher Weise haben die Fahrleitungen 6 und 7 des zweiten Streckenabschnittes 2 je ein Tragseil 11 und einen Fahrdraht 12, wobei die Fahrdrähte 12 ebenfalls über Hängedrähte 13 am Fahrdraht 11 aufgehängt sind. Weiter sind zwei Gleise 14 und 15 zu sehen, die eine Fahrebene definieren.

Die Fahrdrähte 9 und 12 werden von einem Stromabnehmer einer elektrischen Bahn beschliffen. Im Übergangsbereich 3 verlaufen die Fahrdrähte 9 und 12 so, daß mindestens einer der beiden Fahrdrähte 9, 12 vom Stromabnehmer berührt wird. Der Übergangsbereich 3 kann auch als sog. Streckentrennung dienen, sofern die Fahrdrähte 9 und 12 elektrisch voneinander getrennt sind. Im Übergangsbereich 3 findet auch ein Nachspannen der Fahrleitungen 4-7 statt und zwar zwischen zwei Portalrahmen 16 und 17, die jeweils zwei vertikale Masten 18, 19 und 20, 21 haben, deren obere Enden jeweils durch einen horizontalen Abspannbalken 22, 23 miteinander verbunden sind.

An dem zum ersten Streckenabschnitt 1 liegenden Abspannbalken 22 sind vertikale Säulen 24 und 25 befestigt, an denen die Fahrleitungen 6 und 7 des zweiten Streckenabschnittes 3 enden. In entsprechender Weise sind am Abspannbalken 23, der zum zweiten Streckenabschnitt 2 weist, gleiche vertikale Säulen 26 und 27 angebracht, an denen die Fahrleitungen 4 und 5 des ersten Streckenabschnittes 1 enden.

An jeder der vertikalen Säulen 24-27 sind je zwei Federelemente 28, 29 befestigt, wobei das jeweils dort endende Tragseil 8, 11 am einen Federelement 29 und der jeweils dort endende Fahrdraht 9, 12 mit dem anderen Federelement 28 verbunden ist. Die Federelemente dienen zum Nachspannen von Tragseil und Fahrdraht. Beispielsweise können hierfür Federelemente der Firma Pfisterer Kontaktsysteme GmbH & Co. KG, Rosenstraße 44, 73650 Wintersbach, Deutschland, verwendet werden, die unter der Bezeichnung Tensorex®C+ vertrieben werden und in der EP 2 066 523 B1 beschrieben sind. Generell enthalten diese Federelemente eine Spiralfeder, die mit einer oder zwei Scheiben gekoppelt ist, an der der entsprechende Draht bzw. das entsprechende Seil auf- und abgewickelt wird.

Die Enden der Tragseile 8, 11 und der Fahrdrähte 9, 12 sind vor ihrer Befestigung an den Federelementen durch einen in Fig. 1 nicht dargestellten Isolator gegenüber dem Portalrahmen 16, 17 elektrisch isoliert. Weiter sind die jeweils zu einem der Portalrahmen 16 und 17 führenden Tragseile und Fahrdrähte im Übergangsbereich 3 gegenüber der von den Gleisen 14 und 15 gebildeten Fahrebene leicht schräg geneigt. Für die Fahrdrähte 9 und 12 ist dies auch deswegen erforderlich, damit der Stromabnehmer einer elektrischen Bahn nicht den vor der vertikalen Säule liegenden Isolator berührt.

Schließlich ist aus Fig. 1 noch zu erkennen, daß die Fahrleitungen 4 und 5 des ersten Streckenabschnittes 1 an dem zum ersten Streckenabschnitt nahegelegenen ersten Portalrahmen 16 durch Ausleger 30 gehalten sind, die ihrerseits an dem Abspannbalken 22 befestigt sind. In gleicher Weise sind am Portalrahmen 17 entsprechende Ausleger 31 angebracht, die die Fahrleitungen 6 und 7 dort halten. Die Tragseile und Fahrdrähte der Fahrleitungen sind in ihrem Verlauf ab dem jeweiligen Ausleger 30, 31 zum gegenüberliegenden Portalrahmen gegenüber der Fahrebene von dieser fortweisend geneigt.

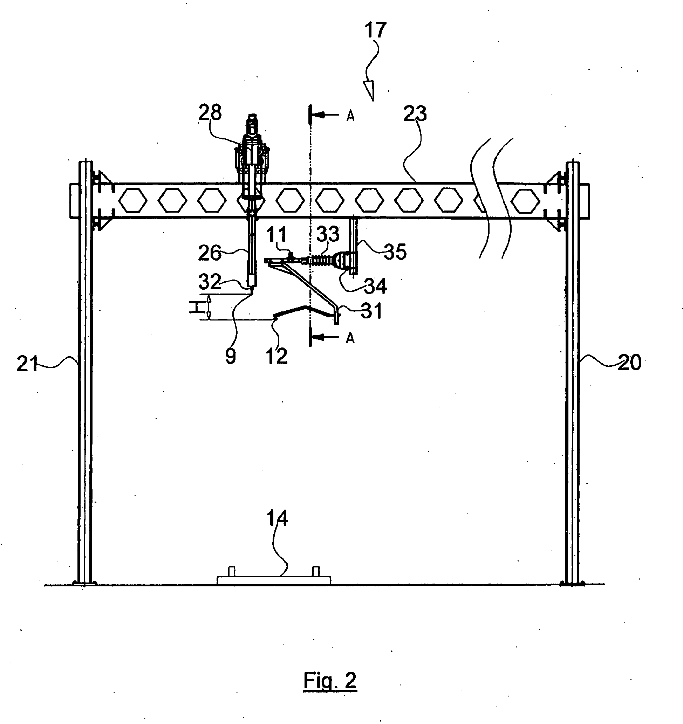

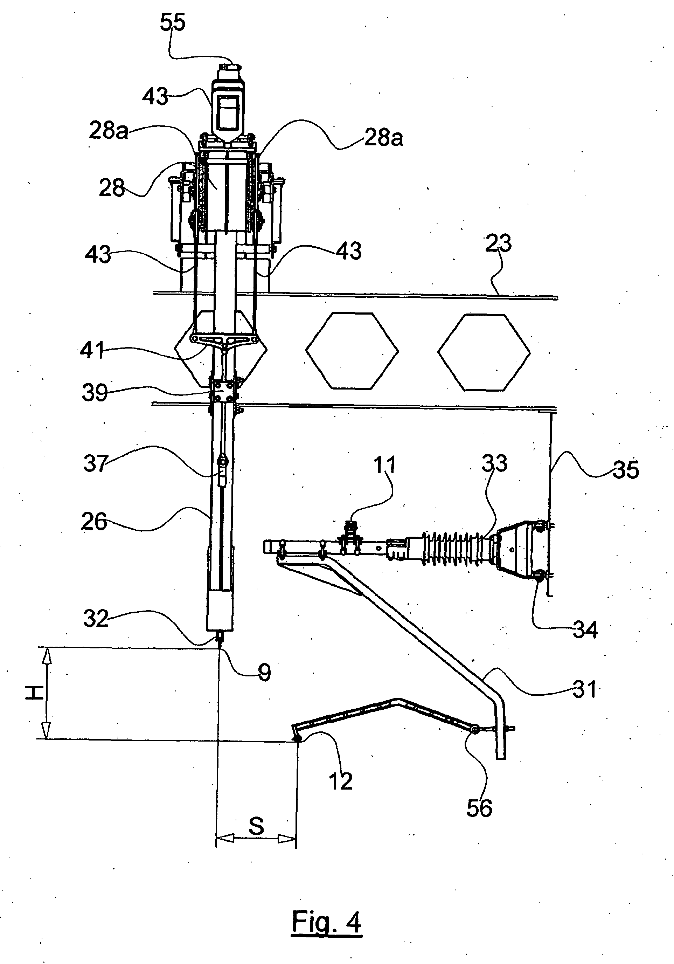

Fig. 2 zeigt eine teilweise abgeschnittene Ansicht einer Nachspanneinrichtung gesehen von dem zweiten Streckenabschnitt 2 auf den Portalrahmen 17, der die beiden vertikalen Masten 20 und 21 und den horizontalen Abspannbalken 23 aufweist. An dem horizontalen Abspannbalken 23 ist auf der zum zweiten Streckenabschnitt hinweisenden Seite die vertikale Säule 26 befestigt, die an ihrem unteren, zum Gleis 14 weisenden Ende eine Umlenkrolle 32 trägt, über die der Fahrdraht 9, der vom ersten Streckenabschnitt 1 und dem Übergangsbereich 3 kommt, geführt ist und vertikal nach oben zu dem Federelement 28 verläuft, was detaillierter im Zusammenhang mit Fig. 4 beschrieben wird.

Das von dem ersten Streckenabschnitt 1 und dem Übergangsbereich 3 kommende Tragseil 8 ist in dieser Ansicht nicht zu sehen, weil es von dem Federelement 28 und der vertikalen Säule 26 verdeckt ist.

An dem Abspannbalken 23 ist weiterhin der Ausleger 31 befestigt, der von dem Abspannbalken 23 nach unten in Richtung zum Gleis 14 ragt. Der Ausleger 31 kann in bekannter Weise Z-förmig sein. Er trägt an seinem unteren freien Ende den Fahrdraht 12, der vom zweiten Streckenabschnitt 2 kommt. An seinem oberen Schenkel trägt der Ausleger 31 das Tragseil 11, das ebenfalls von dem zweiten Streckenabschnitt 2 kommt. Der obere Arm des Auslegers 31 ist über einen Isolator 33 mit einem Schwenkgelenk 34 verbunden, das eine vertikale Schwenkachse aufweist, damit sich der Ausleger 31 bei Längenänderungen des Tragseiles 11 und des Fahrdrahtes 12 verschwenken kann. Der Ausleger 31 ist schließlich über einen vertikalen Arm 35 an dem Abspannbalken 23 befestigt. Der untere Arm des Auslegers 31 ist um eine parallel zur Fahrtrichtung liegende Schwenkachse schwenkbar gelagert.

Aus Fig. 2 erkennt man weiterhin, daß die beiden Fahrdrähte 9 und 12 im Bereich des Portalrahmens 17 einen Höhenversatz H haben, so daß an dieser Stelle nur der Fahrdraht 12 vom Stromabnehmer einer Bahn beschliffen wird.

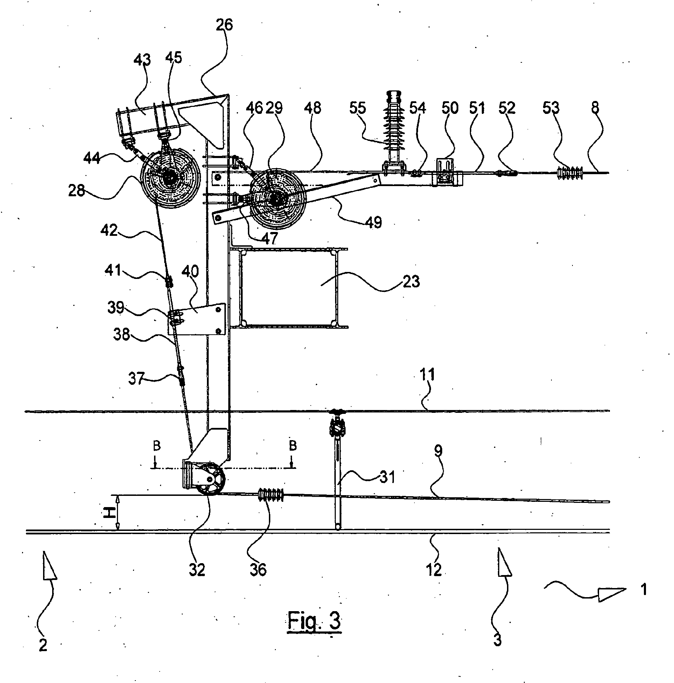

Fig. 3 zeigt eine vergrößerte Schnittansicht längs der Linie A-A der Fig. 2. Die vertikale Säule 26 ist an dem Abspannbalken 23 befestigt und ragt sowohl nach oben als auch nach unten über den Abspannbalken 23 hinaus. Am unteren Ende des Abspannbalkens 32 ist die Umlenkrolle 32 angebracht, über die der Fahrdraht 9 geleitet ist, wobei am Fahrdraht 9 vor der Umlenkrolle 32 ein Isolator 36 angebracht ist. Das um die Umlenkrolle 32 herumgeführte Ende des Fahrdrahtes 9 ist an ein Verbindungselement 37 angeschlossen, das den Fahrdraht 9 mit einem Zugorgan 38 verbindet. Das Zugorgan 38 ist durch eine Klemmeinrichtung 39 geführt, die über einen Kragarm 40 an der vertikalen Säule 27 befestigt ist. Das Zugorgan 39 ist mit seinem anderen Ende an die Mitte eines horizontalen Bügels 41 angeschlossen, an dessen beiden Enden Zugkabel 42 angeschlossen sind, die mit Seilscheiben 28a des Federelementes 28 verbunden sind. Spiralfedern des Federelementes 28 spannen die Zugkabel 42 und das Zugorgan 38 und damit den Fahrdraht 9.

Für die Montage des Fahrdrahtes werden die Federn des Federelementes 28 bereits vorgespannt und das Zugorgan 38 wird unter dieser Vorspannung von der Klemmeinrichtung 39 in der vorgespannten Stellung gehalten. Wenn der Fahrdraht 9 verlegt und an das Verbindungselement 37 angeschlossen ist, wird die Klemmeinrichtung 39 gelöst, so daß erst dann der Fahrdraht 9 mit der Zügkraft des Federelementes 28 gespannt wird.

Das Federelement 28 ist an einem Auslegerarm 43 befestigt, der hier schräg nach unten geneigt von der Säule 26 absteht. Dabei ist das Federelement 28 über zwei Haltelaschen 44 und 45 an dem Auslegerarm 43 befestigt, so daß es drehfest gehalten ist.

Auf der zum Übergangsbereich 3 weisenden Seite der vertikalen Säule 7 ist oberhalb des Abspannbalkens 23 das zweite Federelement 29 für das Spannen des Tragseiles 8 angeordnet. Das Federelement 29 ist über Haltelaschen 46 und 47 drehfest an der vertikalen Säule 26 befestigt.

An der Säule 26 sind zwei Kragarme 48 und 49 befestigt, die miteinander verbunden sind und unter einem spitzen Winkel zueinander stehen. An dem Kragarm 48 ist eine Klemmeinrichtung 50 befestigt, die in gleicher Weise wie die Klemmeinrichtung 39 ein Zugorgan 51 festklemmt, das an seinem einen Ende ein Verbindungselement 52 trägt, an das das Tragseil 8 angeschlossen ist. Vor dem Verbindungselement 52 ist ein Isolator 53 angeordnet.

Auch hier ist das Zugorgan 51 in der Mitte eines Bügels 54 angeschlossen, an dessen beiden Enden Zugkabel 57 angeschlossen sind, die zu dem Federelement 49 führen. Diese Zugkabel sind in der Darstellung der Fig. 2 durch den Kragarm 48 verdeckt und daher nicht sichtbar (sie werden in Fig. 4 gezeigt).

Beim Verlegen des Tragseiles 8 ist das Federelement 29 ebenfalls vorgespannt und das Zugorgan 51 unter der entsprechenden Vorspannung von der Klemmeinrichtung 50 fixiert. Ist das Tragseil 8 an das Verbindungselement 52 angeschlossen, wird die Klemmeinrichtung 50 gelöst und das Tragseil 8 wird durch das Federelement 29 gespannt.

An dem Kragarm 48 ist noch ein vertikal nach oben abstehender Isolator 55 befestigt, an den im Bedarfsfall ein Stromversorgungskabel angeschlossen werden kann.

Aus Fig. 3 ist gut zu erkennen, daß beim Verlegen von Fahrleitungen mittels eines Verlegefahrzeuges der eingangs genannten Art lediglich der Fahrdraht 9 und das Tragseil 8 an die Verbindungselemente 37 und 52 angeschlossen werden müssen und die beiden Klemmeinrichtungen 39 und 50 gelöst werden, während die andere Fahrleitung mit Tragseil 11 und Fahrdraht 12 unterbrechungsfrei unter dem Abspannbalken 23 und der vertikalen Säule 27 durchgeführt und weiter verlegt werden können.

Fig. 4 zeigt eine vergrößerte Detailansicht, ähnlich Fig. 2 und zwar gesehen in Fahrtrichtung der Bahn auf den Portalrahmen 17 und dort auf die vertikale Säule 26. Man erkennt hier besser die Verbindung des Fahrdrahtes 9, der über die Umlenkrolle 32 am unteren Ende der Säule 26 umgelenkt ist und zu dem Verbindungselement 37 geführt ist. An das Verbindungselement 37 ist das Zugorgan 38 angeschlossen, das durch die Klemmeinrichtung 39 zu dem Bügel 41 geführt ist. Von dem Bügel 41 verlaufen zwei parallele Zugkabel 42 zu Seilscheiben 28a des Federelementes 28.

Weiter erkennt man in Fig. 4 noch deutlicher den Höhenversatz der beiden Fahrdrähte 9 und 12 sowie auch, daß die beiden Fahrdrähte 9 und 12 einen Seitenversatz S aufweisen.

Auch ist der Ausleger 31 besser zu erkennen, der über ein Schwenklager 34 mit vertikaler Schwenkachse an dem vertikalen Arm 35 befestigt ist, wobei ein unterer Arm des Auslegers 31, an dessen einem Ende der Fahrdraht 12 befestigt ist, über ein weiteres Schwenkgelenk 56 mit horizontaler Schwenkachse parallel zur Fahrtrichtung gelagert ist, um eine Auslenkung des Fahrdrahtes 12 nach oben und unten zu ermöglichen, wenn der Stromabnehmer einer Bahn vorbeifährt und/oder Schwingungen im Fahrdraht 12 auftreten.

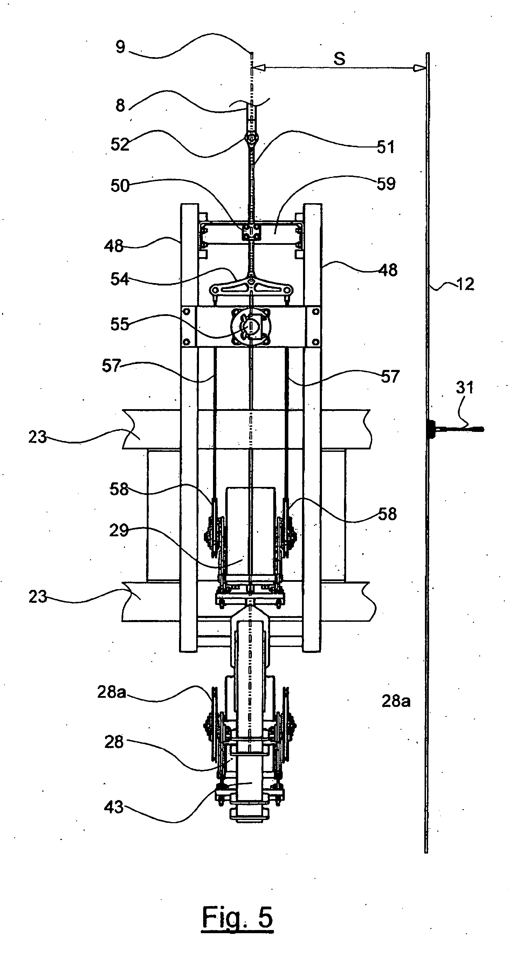

Fig. 5 zeigt eine Draufsicht auf die Nachspanneinrichtung an der vertikalen Säule 26. Man erkennt zwei parallele Kragarme 48, die an der vertikalen Säule 26 befestigt sind und oberhalb des Abspannbalkens 23 verlaufen. Die von der vertikalen Säule 26 fortweisenden Enden der Kragarme 48 sind durch ein höhenverstellbares Querblech 59 miteinander verbunden, in dessen Mitte die Klemmeinrichtung 50 befestigt ist, die das Zugorgan 51 festklemmen kann. Zwischen dem Querblech 59 und dem Federelement 29 ist der Bügel 54 angeordnet, der auch zwischen den beiden Kragarmen 48 liegt und an dessen Mitte das Zugorgan 51 angeschlossen ist. An die beiden Enden des Bügels sind die Zugkabel 57 angeschlossen, die zu den Seilscheiben 58 des Federelementes 28 führen.

Der zu dem Federelement 28 führende Fahrdraht 9 ist gestrichelt dargestellt, da er in dieser Ansicht verdeckt ist.

Zwischen den beiden Kragarmen 48 ist ein weiteres Querblech 60 befestigt, in dessen Mitte der Isolator 55 befestigt ist.

Weiter erkennt man in der Draufsicht der Fig. 5 den Seitenversatz S zwischen den beiden Fahrdrähten 8 und 12.

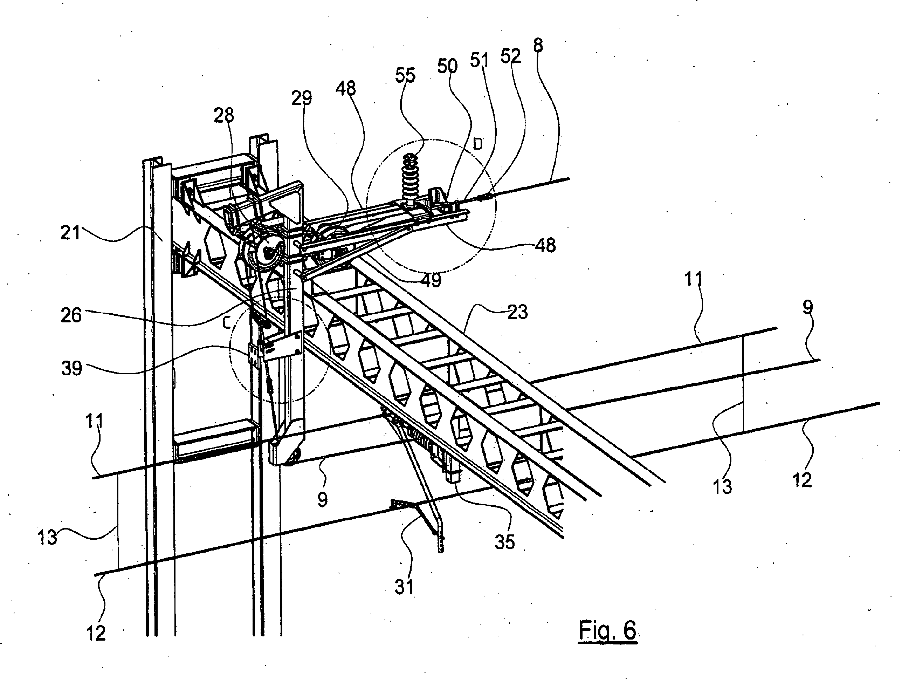

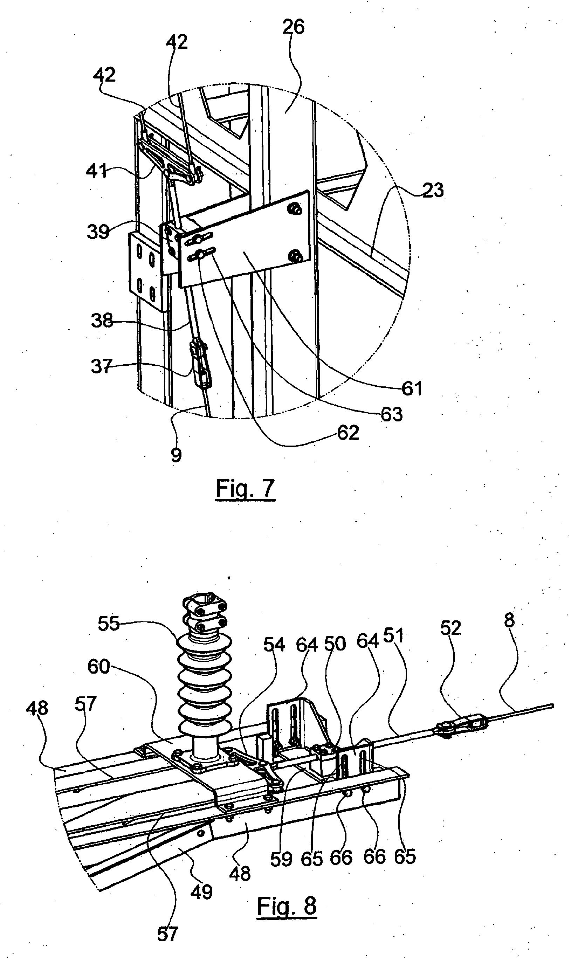

Die perspektivische Darstellung der Fig. 6 verdeutlicht noch plastischer die Nachspanneinrichtung. Die mit C und D in gestrichelten Kreisen hervorgehobenen Teile C und D sind in den nachfolgenden Figuren 7 und 8 vergrößert dargestellt. Es handelt sich im wesentlichen um die Klemmeinrichtungen 39 und 50 für den Fahrdraht 9 und das Tragseil 8.

Die Klemmeinrichtung 39 besteht aus zwei gegeneinander verschraubbaren Metallblöcken, zwischen denen das Zugorgan 38 verläuft und bei fest verschraubten Blöcken durch Reibkraft gehalten ist. Die Klemmeinrichtung ist zwischen zwei Kragarmen 61 durch Schrauben 62 gehalten, die durch Langlöcher 63 in den Kragarmen verlaufen. Dadurch kann die Position der Klemmeinrichtung 39 angepaßt werden, damit das Zugorgan 38 exakt in Verlängerung zu dem Fahrdraht 9 liegt und ohne Knick durch die Klemmeinrichtung 39 geführt werden kann.

In Fig. 8 ist die Klemmeinrichtung 50 für das Tragseil 8 bzw. das Federelement 29 dargestellt, das ebenfalls aus zwei miteinander verschraubten Metallblöcken besteht, zwischen denen das Zugorgan 51 reibschlüssig gehalten werden kann. Die Klemmeinrichtung 50 ist an dem Querblech 59 befestigt, das höhenverstellbar an den Kragarmen 48 befestigt ist und zwar durch vertikale Laschen 64 mit Langlöchern 65 zur Befestigung mittels Schrauben 66 an den Kragarmen 48. Durch diese Verstellbarkeit wird das Zugorgan 51 ebenfalls knickfrei durch die Klemmeinrichtung 50 hindurchgeführt und liegt in gerader Linie zu dem Tragseil 8.

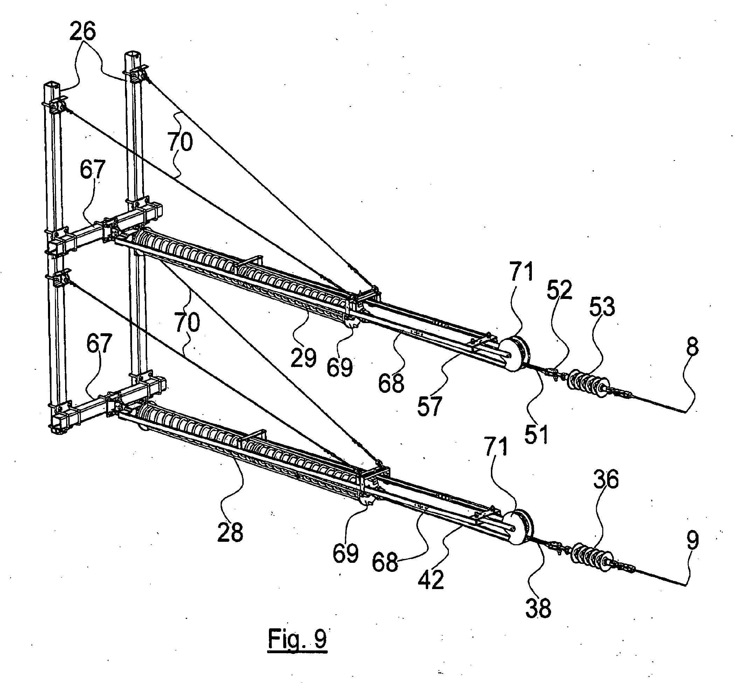

Fig. 9 zeigt ein Ausführungsbeispiel der Erfindung, bei dem die Federelemente 28, 29 Zugfedern sind, die in einem zylindrischen Gehäuse 69 angeordnet sind. Die vertikale Säule 26 wird hier durch zwei parallele Elemente 26a, 26b gebildet, die durch Querträger 67 miteinander verbunden sind. An jedem der beiden Querträger 67 ist ein Kragarm 68 befestigt, der das zylindrische Gehäuse 69 der Federn 28, 29 hält. Die Kragarme 68 sind durch Spannseile 70 an den beiden Elementen 26a, 26b der vertikalen Säule 26 abgestützt, damit sie bei Bruch des Tragseiles 8 oder des Fahrdrahtes 9 nicht herunterfallen.

Die beiden Elemente 26a, 26b der vertikalen Säule 26 sind, wie beim vorhergehenden Ausführungsbeispiel der Figuren 1-8 an dem horizontalen Abspannbalken 22, 23 der Portalrahmen 16, 17 befestigt und zwar so, dass der Abspannbalken 22, 23 im Höhenbereich zwischen den beiden Querbalken 67 liegt. Da Fahrdraht 9 und Tragseil 8 in der Praxis mit ca. 16-18 kN gespannt sind, halten sich die Lasten über und unter dem horizontalen Abspannbalken 22, 23 das Gleichgewicht, wodurch ein Minimum von Torsion auf den Abspannbalken ausgeübt wird, was zu einer leichteren Konstruktion führt und damit wirtschaftlicher ist.

In Fig. 9 werden die Enden von Tragseil 8 und Fahrdraht 9 über Isolatoren 53 und 36 mit Zugorganen 51, 38 verbunden, die auf Seiltrommeln 71 aufgewickelt sind. Zugseile 57 und 42 sind ebenfalls auf die Seiltrommeln 71 aufgewickelt und mit ihren anderen Enden mit dem Federn 29, 28 verbunden.

Nur der Vollständigkeit halber sei noch auf folgendes hingewiesen: Abweichend von der Erfindung wäre eine Anbringung der Federelemente für das Tragseil am horizontalen Abspannbalken auch möglich- hätte aber den Nachteil einer Torsionsbeanspruchung des horizontalen Abspannbalkens.

Auch eine Anordnung des Federelementes für das Spannen des Fahrdrahtes am unteren Ende der vertikalen Säule ist möglich, hätte jedoch den Nachteil, dass die elektrischen Schutzabstände nur schwierig einzuhalten wären, da unter Umständen die durchlaufende Fahrleitung eingeschaltet und nur die abgespannte Fahrleitung ausgeschaltet ist. Die Schutzabstände sind mit 25-66 cm, je nach elektrischer Spannung und Kundenvorgaben, einzuhalten. Wenn die Federelemente am unteren Ende der vertikalen Balkens angeordnet sind, müsste der daran abgespannte Fahrdraht sehr stark angehoben werden, um die Schutzabstände einhalten zu können. Dadurch würde die Neigung des angehobenen Fahrdrahtes zu steil und eine Stromabnahme bei höheren Geschwindigkeiten von 200 km/h nicht mehr sicher möglich.

## Patentansprüche

1. Kettenfahrleitungen elektrischer Bahnen mit einer Nachspanneinrichtung sowie mit mindestens zwei Fahrleitungen (4, 5, 6, 7), die jeweils ein Tragseil (8, 11) und einen Fahrdraht (9, 12) aufweisen, wobei die Kettenfahrleitungen über vertikale Säulen (24, 25, 26, 27), horizontale Abspannbalken (22, 23) und Portalrahmen (16, 17) verfügen,
wobei die erste Fahrleitung (4, 5) in einem ersten Streckenabschnitt (2) und die zweite Fahrleitung (6, 7) in einem zweiten Streckenabschnitt (2) angeordnet ist, und die erste und zweite Fahrleitung (4-7) sich in einem gemeinsamen Übergangsbereich (3) überlappen,
wobei das Tragseil und der Fahrdraht der beiden Fahrleitungen (4-7) an ihrem jeweiligen Ende des Übergangsbereiches (3) mit Federelementen (28, 29) verbunden sind, die die Fahrleitungen (4-7) spannen,
wobei die Federelemente (28, 29) für das Nachspannen der zugeordneten Fahrleitung an einer der vertikalen Säulen (24, 25, 26, 27) befestigt sind,
wobei die vertikalen Säulen (24-27) an den horizontalen Abspannbalken (22, 23) der Portalrahmen (16, 17) befestigt sind,
und
wobei der Fahrdraht (9, 12) beider Streckenabschnitte (1, 2) und das Tragseil (8, 11) eines Streckenabschnittes (1 oder 2) unter dem Abspannbalken (22, 23) angeordnet sind,
**dadurch gekennzeichnet,**
**dass** die vertikalen Säulen (24-27) in gerader Linie zu der nachzuspannenden Fahrleitung (4-7) angeordnet sind,
**dass** die Federelemente (28, 29) oberhalb der Abspannbalken (22, 23) angeordnet sind und
**dass** am unterhalb der Abspannbalken (22, 23) angeordneten Ende der vertikalen Säulen (24-27) eine Umlenkrolle (32) angeordnet ist, an der der nachzuspannende Fahrdraht (9, 12) nach oben zum zugeordneten Federelement (28) umgelenkt wird.

2. Nachspanneinrichtung nach Anspruch 1, **dadurch gekennzeichnet,**
**dass** die vertikalen Säulen (25, 28) auf der der nachzuspannenden Fahrleitung (4-7) abgewandten Seite der Abspannbalken (22, 23) angeordnet sind.

3. Nachspanneinrichtung nach einem der Ansprüche 1 oder 2, **dadurch gekennzeichnet,**
**dass** die Federelemente (28, 29) jeweils mit einem Zugorgan (38, 51) verbunden sind,
**dass** die Zugorgane (38, 51) durch Klemmeinrichtungen (39, 50) hindurchgeführt sind und
**dass** die nachzuspannenden Tragseile (8) und die nachzuspannenden Fahrdrähte (9) über Verbindungselemente (37, 52) mit den Zugorganen (38, 51) verbindbar sind.

4. Nachspanneinrichtung nach Anspruch 3, **dadurch gekennzeichnet,**
**dass** die Klemmeinrichtungen (39, 50) relativ zu den vertikalen Säulen (24-27) verschiebbar sind.

5. Nachspanneinrichtung nach einem der Ansprüche 3 oder 3, **dadurch gekennzeichnet,**
**dass** die Klemmeinrichtung (39, 50) das Zugorgan (38, 51) durch Reibschluß zwischen zwei gegeneinander verspannbaren Elementen hält.

6. Nachspanneinrichtung nach einem der Ansprüche 3 bis 5, **dadurch gekennzeichnet,**
**dass** die Federelemente (28, 29) zwei koaxiale Seilscheiben (28a, 58) aufweisen, die mit mindestens einer Spiralfeder gekoppelt sind und dass die Zugorgane (38, 51) mit einem Bügel (41, 54) verbunden sind, an dessen Enden je ein Zugseil (43, 57) angeschlossen ist, das zur zugeordneten Seilscheibe (28a, 58) führt.

7. Nachspanneinrichtung nach einem der Ansprüche 1 bis 6, **dadurch gekennzeichnet,**
**dass** das Federelement (28), das den Fahrdraht (9) nachspannt, auf der dem Übergangsbereich (3) abgewandten Seite der vertikalen Säule (24-27) angeordnet ist und dass das Federelement (29), das das Tragseil (8) nachspannt, auf der dem Übergangsbereich (3) zugewandten Seite der vertikalen Säule (24-27) angeordnet ist.

8. Nachspanneinrichtung nach einem der Ansprüche 1 bis 7, **dadurch gekennzeichnet,**
**dass** die Federelemente (28, 29) durch Laschen (44, 45; 46, 47) drehfest an der vertikalen Säule (24-27) befestigt sind.

9. Nachspanneinrichtung nach einem der Ansprüche 4 bis 8, **dadurch gekennzeichnet,**
**dass** die Klemmeinrichtungen (39, 50) über Kragarme (40, 48) mit der vertikalen Säule (24-27) verbunden sind.

## Claims

1. Catenaries of electric railways with a retensioning device and with at least two contact lines (4, 5, 6, 7), each having a supporting cable (8, 11) and a contact wire (9, 12), whereby the catenaries have vertical pillars (24 , 25, 26, 27), horizontal bracing beams (22, 23) and portal frames (16, 17),
wherein the first contact line (4, 5) is disposed in a first track section (2) and the second contact line (6, 7) in a second track section (2), and the first and second contact line (4-7) overlap each other in a common transition region (3),
wherein the supporting cable and the contact wire of the two overhead lines (4-7)) are connected at their respective end of the transition region (3) with spring elements (28, 29, which tension the contact lines(4-7),
wherein the spring elements (28, 29) are fastened on one of the vertical pillars (24, 25, 26, 27) for tensioning of the associated contact line,
wherein said vertical columns (24-27) are fastened on the horizontal bracing beams (22, 23) of the portal frame (16, 17),
and
wherein the contact wire (9, 12) of both sections (1, 2) and the supporting cable (8, 11) of a track section (1 or 2) are arranged under the bracing beams (22, 23),
**characterized in**
**that** the vertical pillars (24-27) are arranged in a straight line to the catenary (4-7) to be retensioned,
**that** the spring elements (28, 29) are arranged above the bracing beams (22, 23), and
**that** on that end of the vertical columns (24-27) which is arranged underneath of the bracing beams (22, 23), a pulley (32) is arranged, whereon the contact wire (9,12) to be retensioned is deflected up to the associated spring element (28).

2. A retensioning device according to claim 1, **characterized in that** that the vertical columns (25, 28) are arranged on that side of the bracing beam (22, 23) facing away from the catenary (4-7) to be retensioned.

3. A retensioning device according to one of claims 1 or 2,**characterized in that** that the spring elements (28, 29) are connected with a respective pulling element (38, 51),
that the pulling elements (38, 51) are guided through clamping means (39, 50) and
that the supporting cables (8) to be retensioned and the contact wires (9) to be retensioned are connectable with the pulling elements (38, 51) via connecting elements (37, 52).

4. A retensioning device according to claim 3, **characterized in that** that the clamping means (39, 50) are movable relative to the vertical columns (24-27).

5. A retensioning device according to one of Claims 3 or 3,**characterized in that** that the clamping device (39, 50) keeps the pulling elements (38, 51) by friction between two mutually braceable elements.

6. A retensioning device according to one of claims 3 to 5,**characterized in that** that the spring elements (28, 29) comprise two coaxial pulleys (28a, 58) that are coupled with at least one spiral spring and **in that** the pulling elements (38, 51) are connected with a bracket (41, 54), at whose ends is connected a respective traction cable (43, 57) leading to the associated pulley (28a, 58).

7. A retensioning device according to one of claims 1 to 6,**characterized in that** that the spring element (28) that tightens the contact wire (9) is arranged on that side of the vertical column (24-27) facing away from the transition region (3) and that the spring element (29) which tightens the supporting cable (8) is arranged on that side of the vertical column (24-27) facing to the transition area (3)

8. A retensioning device according to one of claims 1 to 7,**characterized in that** that the spring elements (28, 29) are mounted in a torque proof manner on the vertical column (24-27) by tabs (44, 45; 46, 47).

9. A retensioning device according to one of claims 4 to 8,**characterized in that** that the clamping devices (39, 50) are connected (40, 48) with the vertical column (24-27) by cantilever arms.

## Revendications

1. Caténaires de chemin de fer électrique avec un dispositif de réglage de tension ainsi qu'avec au moins deux lignes de caténaire (4, 5, 6, 7), chacune comportant un câble porteur (8, 11) et un fil de contact (9, 12), dans lesquelles les caténaires ont des colonnes verticales (24, 25, 26, 27), des poutres horizontales de contreventement (22, 23) et des portiques (16, 17),
dans lesquelles la première ligne de caténaire (4, 5) est disposée dans un premier tronçon de ligne (2) et la deuxième ligne de caténaire (6, 7) dans un deuxième tronçon de ligne (2), et les première et deuxième lignes de caténaire (4-7) se chevauchent dans une zone commune de transition (3),
dans lesquelles le câble porteur et le fil de contact des deux lignes de caténaire (4-7) sont reliés à leur extrémité respective de la zone de transition (3) avec des éléments à ressort (28, 29), qui tendent les lignes de caténaire (4-7),
dans lesquelles les éléments à ressort (28, 29) sont fixés à une des colonnes verticales (24, 25, 26, 27) pour la mise sous tension de la ligne de caténaire associée,
dans lesquelles les colonnes verticales (24-27) sont fixées aux poutres horizontales de contreventement (22, 23) des portiques (16, 17),
et
dans lesquelles le fil de contact (9, 12) des deux tronçons de ligne (1, 2) et le câble porteur (8, 11) d'un tronçon de ligne (1 ou 2) sont disposés sous la poutre de contreventement (22, 23),
**caractérisées,**
**en ce que** les colonnes verticales (24-27) sont disposées dans l'alignement de la ligne de caténaire (4-7) qu'elles tendent,
**en ce que** les éléments à ressort (28, 29) sont disposés au-dessus de la poutre de contreventement (22,23) et
**en ce que** en-dessous des poutres de contreventement (22, 23) est disposée une poulie (32) disposée à l'extrémité des colonnes verticales (24-27), par laquelle le fil de contact (9, 12) qu'elle tend est dévié vers le haut en direction de l'élément de ressort (28).

2. Dispositif de réglage de tension selon la revendication 1, **caractérisé en ce que** les colonnes verticales (24, 25, 26, 27) de la ligne de caténaire (4-7) qu'elles tendent sont disposées sur le côté opposé de la poutre de contreventement (22, 23).

3. Dispositif de réglage de tension selon l'une des revendications 1 ou 2, **caractérisé,**
**en ce que** les éléments à ressort (28, 29) sont chacun reliés à un organe de tension (38, 51),
**en ce que** les organes de tension (38, 51) sont entrainés par des dispositifs de serrage (39, 50) et
**en ce que** les câbles porteurs (8) qu'ils tendent et le fil de contact (9) qu'ils tendent peuvent être raccordés aux organes de tension (38, 51) par des éléments de liaison (37, 52).

4. Dispositif de réglage de tension selon la revendication 3, **caractérisé en ce que** les dispositifs de serrage (39, 50) peuvent être déplacés relativement aux colonnes verticales (24-27).

5. Dispositif de réglage de tension selon l'une des revendications 3 ou 3 **caractérisé en ce que**,
le dispositif de serrage (39, 50) maintient l'organe de de tension (38, 51) par compression entre deux éléments pouvant être serrés l'un contre l'autre.

6. Dispositif de réglage de tension selon l'une des revendications 3 à 5, **caractérisé en ce que**,
les éléments à ressort (28, 29) comportent deux poulies coaxiales (28a, 58), lesquelles sont couplées avec au moins un ressort en spirale et les organes de traction (38, 51) sont reliés par une attache (41, 54), aux extrémités de laquelle un câble de traction (43, 57) est connecté, lequel entraine la poulie associée (28a, 58).

7. Dispositif de réglage de tension selon l'une des revendications 1 à 6, **caractérisé,**
**en ce que** l'élément à ressort (28), qui tend le fil de contact (9), est disposé sur le côté de la colonne verticale (24-27) opposé à la zone de transition (3)
et **en ce que** l'élément à ressort (29) qui tend le câble porteur (8), est disposé sur le côté de la colonne verticale (24-27) face à la zone de transition (3).

8. Dispositif de réglage de tension selon l'une des revendications 1 à 7, **caractérisé en ce que**, les éléments de ressort (28, 29) sont fixés par des pattes (44, 45 ; 46, 47) solidaires en rotation des colonnes verticales (24-27).

9. Dispositif de réglage de tension selon l'une des revendications 4 à 8, **caractérisé en ce que**, les dispositifs de serrage (39, 50) sont reliés à la colonne verticale (24-27) par des bras en porte à faux (40,48).
